(19) Europäisches Patentamt
European Patent Office
Office européen des brevets

(11) EP 3 527 817 A1

(12) EUROPÄISCHE PATENTANMELDUNG

(43) Veröffentlichungstag:
21.08.2019 Patentblatt 2019/34

(51) Int Cl.:
*F03D 7/04* (2006.01)

(21) Anmeldenummer: 18157368.4

(22) Anmeldetag: 19.02.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder:
• **Kaiser, Markus**
**80539 München (DE)**
• **Weber, Marc Christian**
**80803 München (DE)**

(54) **VERFAHREN UND VORRICHTUNGEN ZUR AUTOMATISCHEN ERMITTLUNG UND/ODER KOMPENSATION DES EINFLUSSES EINER WIRBELSCHLEPPE AUF EINE WINDKRAFTANLAGE**

(57)     Die Erfindung betrifft ein Ermittlungs-Verfahren zur automatischen Ermittlung des Einflusses einer ersten Windkraftanlage (2) auf eine zweite Windkraftanlage (3) eines Windkraftsystems (1), wobei die ersten Windkraftanlage (2) bezüglich der Windrichtung vor der zweiten Windkraftanlage (3) steht, umfassend die Schritte:
- Bereitstellung einer Ermittlungseinheit (6) umfassend eine trainierte Zustandsvorhersage-Einheit (fE'),
- Bereitstellung eines Datensatzes (D) umfassend Zustands-Zeitreihendaten (Z) zum Zustand zumindest der ersten Windkraftanlage (2),
- Voraussage des Zustandes der hinteren, zweiten Windkraftanlage (3) mittels der trainierten Zustandsvorhersage-Einheit (fE') auf Basis der Zustands-Zeitreihendaten (Z) des Datensatzes (D).

Die Erfindung betrifft des Weiteren ein Verfahren zum Erstellen einer solchen Ermittlungseinheit (6) sowie eine solche Ermittlungseinheit (6) mit einer Zustandsvorhersage-Einheit (fE') und ggf. einer Zeitkorrelations-Einheit (LE'), eine Lern-Rechenvorrichtung zum Training einer Ermittlungseinheit (6), ein Steuerverfahren sowie eine Steuereinrichtung und ein entsprechendes Windkraftsystem.

FIG 9

EP 3 527 817 A1

**Beschreibung**

Die Erfindung befasst sich mit der Ermittlung des Einflusses einer von einer ersten Windkraftanlage verursachten Wirbelschleppe auf eine zweite Windkraftanlage eines Windkraftsystems. In diesem Rahmen wird eine dazu ausgelegte Ermittlungseinheit und ein Ermittlungs-Verfahren zur automatischen Ermittlung dieses Einflusses basierend auf dem Prinzip des maschinellen Lernens sowie ein Verfahren zum Erstellen einer solchen Ermittlungseinheit und eine entsprechende Lern-Rechenvorrichtung vorgestellt. Die Erfindung betrifft des Weiteren ein Steuerverfahren und eine Steuereinrichtung zur Steuerung zumindest einer Windkraftanlage eines Windkraftsystems, sowie ein entsprechendes Windkraftsystem.

Ein Windpark umfasst eine Anzahl von Windkraftanlagen ("WKA") bzw. von "(Wind-)Turbinen". Auch wenn ein Windpark auch eine einstellige Anzahl von WKA aufweisen kann, umfassen typische Windparks mehrere zehn bis hundert Turbinen und können sich über eine große Fläche auf dem Land oder dem Meer erstrecken. In der Regel durchläuft der Wind in einem Windpark mehrere Turbinen nacheinander. Dabei entstehen an den einzelnen Windkraftanlagen Luftwirbel, die sich nachteilhaft auf in Windrichtung nachfolgende WKA auswirken können.

Zwar sind in einem Windpark die Abstände zwischen den WKA so gewählt, dass gegenseitige Störungen minimiert werden, diese können jedoch aufgrund der räumlichen Begrenztheit des Windparks und der angestrebten Energieausbeute nicht so groß gewählt werden, dass Störungen vollständig vermieden werden.

Betrachtet man zum Beispiel ein Paar von Turbinen, die entlang einer gemeinsamen Achse parallel zur vorherrschenden Windrichtung ausgerichtet sind, mit einer in Windrichtung vorderen Turbine und einer in Windrichtung hinteren Turbine, welche die gleiche Windfront später passiert, so kann die Problematik anschaulich beschrieben werden.

Der Vorgang des Umformens von Windenergie in der vorderen WKA in elektrische Energie reduziert die Windgeschwindigkeit und führt zu Turbulenzen hinter dieser Turbine. Der konische Bereich des veränderten Windfeldes hinter der vorderen WKA wird dabei auch als "Wirbelschleppe" bezeichnet. Da sich die Wirbelschleppe über einen vergleichsweise großen Bereich ausbreitet, beeinflusst sie (bei entsprechender Windrichtung) die hintere Turbine. Dies wirkt sich nicht nur nachteilhaft auf ihre Energieproduktion aus, sondern auch auf ihre Lebensdauer bzw. den Verschleiß, da durch die Wirbel an unterschiedlichen Stellen der WKA ungleich wirkende Kräfte wirken.

Die tatsächliche Form einer Wirbelschleppe hängt stark von der komplexen und stochastischen Natur des einlaufenden Windfeldes sowie von den aerodynamischen Eigenschaften und dem Betriebszustand der vorderen Turbine ab. Vorhersagen über die Form der Wirbelschleppe und ihre Auswirkungen auf die Leistung der hinteren WKA können aufgrund dieser Komplexität bisher nicht zufriedenstellend getroffen werden.

In bisher verwendeten Verfahren wird die von einer Windkraftanlage hervorgerufene Wirbelschleppe entweder durch numerische Strömungsdynamiksimulationen oder daraus abgeleitete effektive Modelle abgeschätzt. Ein derzeit verwendetes Modell basiert z.B. auf der Annahme, dass die Welle hinter der vorgelagerten Turbine kegelförmig ist. Da diese Verfahren einen sehr großen rechnerischen Aufwand erfordern, werden in der Praxis oftmals einige Annahmen über das physikalische System vereinfacht, indem beispielsweise nur stationäre Lösungen berücksichtigt werden oder Oberflächenwechselwirkungen des Nachlaufbereichs vernachlässigt werden. Aufgrund dieser Vereinfachungen und der Tatsache, dass die meisten existierenden Modelle nur zeitunabhängige Lösungen für das Problem bereitstellen, ist es derzeit nicht möglich, die bekannten Modelle zu verwenden, um eine kurzfristige Anpassung einer WKA abzuleiten, die dynamisch auf Wirbelschleppeneffekte reagieren kann.

Es ist eine Aufgabe der vorliegenden Erfindung, alternative, komfortablere Verfahren und Vorrichtungen zur automatischen Ermittlung und/oder Kompensation des Einflusses einer Wirbelschleppe auf eine Windkraftanlage zur Verfügung zu stellen, insbesondere ein Verfahren zum Erstellen einer diesbezüglichen Ermittlungseinheit, sowie eine solche Ermittlungseinheit und ein Ermittlungs-Verfahren zur automatischen Ermittlung des Einflusses einer von einer ersten Windkraftanlage verursachten Wirbelschleppe auf mindestens eine zweite Windkraftanlage eines Windkraftsystems basierend auf dem Prinzip des maschinellen Lernens. Es soll des Weiteren insbesondere eine entsprechende Lern-Rechenvorrichtung, ein Steuerverfahren und eine Steuereinrichtung zur Steuerung zumindest einer Windkraftanlage eines Windkraftsystems, sowie ein entsprechendes Windkraftsystem zur Verfügung gestellt werden mit denen die oben beschriebenen Nachteile vermieden werden.

Diese Aufgabe wird durch ein Verfahren gemäß Patentanspruch 1, eine Lern-Rechenvorrichtung gemäß Patentanspruch 5 eine Ermittlungseinheit gemäß Patentanspruch 6, ein Ermittlungs-Verfahren gemäß Patentanspruch 7 sowie durch ein Steuerverfahren gemäß Patentanspruch 11, eine Steuereinrichtung gemäß Patentanspruch 12 und ein Windkraftsystem gemäß Patentanspruch 13 gelöst.

Die Lösung des oben geschilderten Problems ist (wie bereits erwähnt) sehr komplex und eine zur automatischen Ermittlung des Einflusses einer von einer ersten Windkraftanlage verursachten Wirbelschleppe auf eine zweite Windkraftanlage eines Windkraftsystems nicht auf einfache Weise möglich. Auch ist eine erfindungsgemäße Ermittlungseinheit nicht auf einfache Weise herstellbar. Daher betrifft diese Erfindung nicht nur eine entsprechende Ermittlungseinheit bzw. ein Ermittlungs-Verfahren, sondern auch die Herstellung dieser Ermittlungseinheit und die diesbezüglich notwendige besondere Lern-Rechenvorrichtung. Auch bietet sich mit der Ermittlung eines Zustandes einer WKA zugleich die Möglichkeit einer vorteilhaften Steuerung einer WKA oder von Ableitungen von Informationen über das Windfeld. Auch dies ist ein Teil der Erfindung.

Wie bereits erwähnt, dient die Erfindung zur automatischen Ermittlung des Einflusses einer von einer ersten Windkraftanlage verursachten Wirbelschleppe auf (mindestens) eine zweite Windkraftanlage eines Windkraftsystems, insbesondere auf deren Leistung. Dabei steht die erste Windkraftanlage bezüglich der Windrichtung vor der zweiten Windkraftanlage. Es bietet sich aus Gründen der Anschaulichkeit an, eine Windfront zu betrachten, die auf die erste WKA trifft und bei ihrem Passieren gestört wird. Dadurch entsteht eine Wirbelschleppe in der Windfront. Nach einer gewissen Zeit, die in der Regel nicht direkt aus der Windgeschwindigkeit abgeleitet werden kann, trifft die (verwirbelte) Windfront auf die zweite WKA.

Das erfindungsgemäße Verfahren zum Erstellen einer Ermittlungseinheit umfasst die folgenden Schritte:

- Bereitstellung einer Lern-Rechenvorrichtung

Diese Lern-Rechenvorrichtung ist dabei zum koordinierten Trainieren zumindest zweier Regressionsverfahren basierend auf dem Prinzip des maschinellen Lernens ausgelegt. Wie im Folgenden genauer erklärt wird, folgt die vorliegende Erfindung dem Ansatz die Bewegung des Windes (z.B. einer oben erwähnten Windfront) auf der einen Seite und den Zustand einer (zweiten) WKA auf der anderen Seite mittels zweier Regressionsverfahren zu ermitteln. Daher ist die Lern-Rechenvorrichtung zu einem koordinierten Trainieren zweier Regressionsverfahren ausgelegt.

Die im Rahmen der Erfindung genannten Regressionsverfahren sind stets Regressionsverfahren im Sinne des maschinellen Lernens (s. dazu z.B. Bishop, "Pattern Recognition and Machine Learning", Springer Science+Business Media, LLC, ISBN-10: 0-387-31073-8 / ISBN-13: 978-0387-31073-2; z.B. Seite 3).

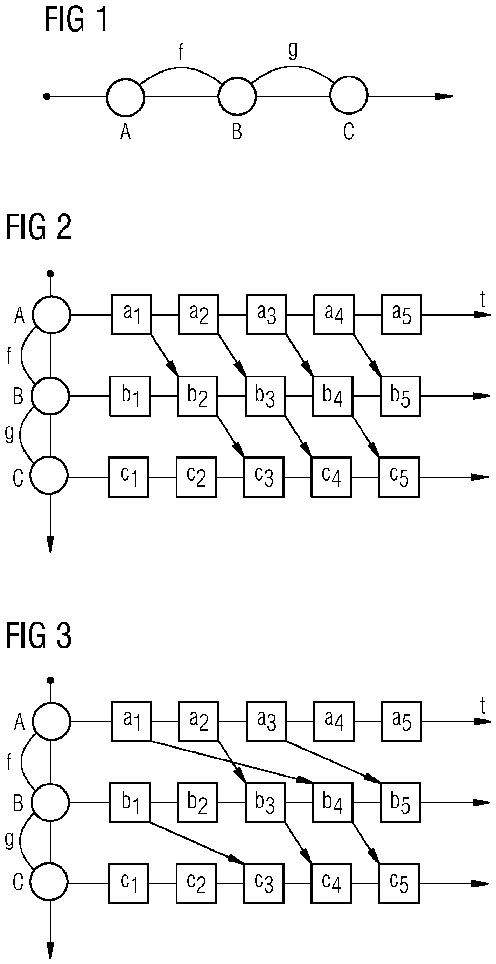

Die der Erfindung zugrundeliegenden theoretischen Überlegungen werden weiter unten im Zusammenhang mit den Figuren 1 bis 5 tiefergehend erläutert.

- Bereitstellung einer Zeitkorrelations-Einheit

Diese Zeitkorrelations-Einheit ist zur Ausführung eines ersten Regressionsverfahrens auf oder an der Lern-Rechenvorrichtung ausgelegt und noch untrainiert oder nicht optimal trainiert. Untrainiert bedeutet, dass die Parameter des Regressionsverfahrens Standardwerten entsprechen. Da das Verfahren auch zur "Weiterbildung", also zur Optimierung, einer bereits trainierten Zeitkorrelations-Einheit geeignet ist, kann auch eine solche für das Verfahren bereitgestellt werden. Jegliche Weiterbildung verbessert diese.

Die Zeitkorrelations-Einheit ist so ausgestaltet, dass unter Nutzung des ersten Regressionsverfahrens eine Zeitkorrelations-Funktion ausgebildet werden kann, die in der Regel sehr komplex gestaltet ist. Diese Zeitkorrelations-Funktion dient zur Ermittlung bzw. Beschreibung der Korrelation von Zustandsdaten der ersten Windkraftanlage mit der zweiten Windkraftanlage, z.B. basierend auf der die Propagation der Wirbelschleppe einer Windfront.

- Bereitstellung einer Zustandsvorhersage-Einheit

Diese Zustandsvorhersage-Einheit ist zur Ausführung eines zweiten Regressionsverfahrens auf oder an der Lern-Rechenvorrichtung ausgelegt und noch untrainiert oder nicht optimal trainiert. Untrainiert bedeutet auch hier, dass die Parameter eines Regressionsverfahrens voreingestellten Standardwerten entsprechen und dieses noch nicht einem Training unterworfen war. Da das Verfahren auch zur "Weiterbildung", also zur Optimierung einer bereits trainierten Zustandsvorhersage-Einheit geeignet ist, kann es auch zu einer Verbesserung einer bereits trainierten Zustandsvorhersage-Einheit beitragen.

Die Zustandsvorhersage-Einheit ist so ausgestaltet, dass unter Nutzung des zweiten Regressionsverfahrens eine Zustandsvorhersage-Funktion ausgebildet werden kann, die in der Regel ebenfalls sehr komplex gestaltet ist. Diese Zustandsvorhersage-Funktion dient zur Vorhersage eines Zustands zumindest der zweiten Windkraftanlage basierend auf Zustandsdaten der ersten Windkraftanlage, z.B. der Leistung oder dem Leistungsverhältnis zur ersten WKA.

Die Zustandsvorhersage-Einheit und/oder die vorgenannte Zeitkorrelations-Einheit kann in Form von Software auf einer Rechenvorrichtung ausgebildet sein, sie kann aber auch in Form von Hardware vorliegen, z.B. als programmierter EPROM oder als FPGA (Programmierbare Matrix, engl.: "Field Programmable Gate Array"), wie weiter unten anhand der Ermittlungseinheit genauer ausgeführt wird.

- Bereitstellung eines Lern-Datensatzes

Es wird dabei zumindest ein Lern-Datensatz umfassend Zustands-Zeitreihendaten der (beiden) WKA bereitgestellt. Dabei handelt es sich um Daten, die in der Realität eine Korrelation aufweisen, z.B. weil sie beide zu Zeiten aufgenommen wurden als die gleiche Windfront die beiden WKA durchströmte. Dabei dürfen durchaus einige Daten der Zustands-Zeitreihendaten unkorreliert sein. Hauptsache es stehen korrelierte Daten zur Verfügung. Wenn z.B. Zustands-Zeitreihendaten der beiden WKA aus dem exakt gleichen Zeitraum zur Verfügung stehen, so sind die letzten Daten der Zustands-Zeitreihendaten der ersten WKA nicht mehr korreliert (da die entsprechende Windfront die zweite WKA noch nicht erreichen konnte, und es sind auch die ersten Daten der Zustands-Zeitreihendaten der zweiten WKA nicht korreliert (da sie noch von einer Windfront stammen, für die keine Daten mehr von der ersten WKA vorliegen). Der Rest der Zustands-Zeitreihendaten dieses Beispiels sind jedoch miteinander korreliert, da eine Windfront sowohl die erste WKA als auch die zweite WKA durchströmt hat. Wohlgemerkt sollte der Wind auch aus der richtigen Richtung wehen. Ansonsten sollte die Nummerierung der WKA vertauscht werden, so dass die erste WKA stets vor der zweiten WKA im Wind steht. Weht der Wind von der Seite, kann der Fall auftreten, dass die Zustands-Zeitreihendaten nicht miteinander korreliert sind, da die zweite WKA nicht von einer Wirbelschleppe der ersten WKA getroffen wird, als nicht derselbe Windfrontabschnitt beide WKA passiert. Das Erfindungsgemäße Verfahren könnte aber auch über solche Fälle Aussagen treffen, da auch hier durchaus Zustände der zweiten WKA aus Zustands-Zeitreihendaten der ersten WKA abgeleitet werden können, z.B. "Bei Seitenwind aus Westen findet keine Beeinträchtigung statt, bei Seitenwind von Osten entstehen Beeinträchtigungen aus unbekanntem Grund".

Die Regressionsmodelle werden also anhand von Zustands-Zeitreihendaten des Lern-Datensatzes aus zwei oder mehr parallelen Turbinen erlernt. Dabei können Daten aus der ferneren Vergangenheit oder auch aktuelle Daten als Zustands-Zeitreihendaten verwendet werden. Wenn die Absicht besteht, später die Ermittlungseinheit in der Praxis mit Bezug zu einer bestimmten WKA in der Realität einzusetzen, sollten die Zustands-Zeitreihendaten auch Daten dieser bestimmten WKA umfassen (und mindestens einer weiteren, benachbarten WKA). Insbesondere in einem inhomogenen Gelände oder bei einer inhomogenen WKA-Struktur im Windkraftsystem sind unterschiedliche Positionen in der Regel nicht miteinander vergleichbar, so dass Zustands-Zeitreihendaten einer WKA nicht unbedingt den Zustand einer anderen WKA wiedergeben können. Dies mag in einem homogenen Gelänge und einer homogenen Struktur eines Windenergiesystems durchaus anders sein.

- Training

Das Training umfasst ein koordiniertes Trainieren der Zeitkorrelations-Einheit und der Zustandsvorhersage-Einheit gemäß eines Prinzips bzw. im Sinne des maschinellen Lernens von Regressionsverfahren. Im Sinne der Erfindung bedeutet "koordiniert", dass zwar jedes der beiden Regressionsverfahren für sich trainiert wird, die Zustands-Zeitreihendaten jedoch von beiden Regressionsverfahren (ggf. nach einer Modifikation durch das jeweils andere Regressionsverfahren) bearbeitet werden. Dabei können z.B. Zustands-Zeitreihendaten während des Trainings der Zeitkorrelations-Einheit von dieser ggf. bearbeitet werden und damit danach die Zustandsvorhersage-Einheit trainiert werden.

- Erstellen der Ermittlungseinheit

Die Ermittlungseinheit wird zumindest mit der trainierten Zustandsvorhersage-Einheit erstellt, z.B. im einfachsten Fall damit, dass die trainierte Zustandsvorhersage-Einheit als Ermittlungseinheit erklärt wird. Optional kann die Ermittlungseinheit auch die trainierte Zeitkorrelations-Einheit umfassen.

Mit dem erfindungsgemäßen Verfahren ist es nun möglich, die Beobachtungen der vor- und nachgelagerten Turbinen zeitlich so auszurichten, dass die Vorhersagekraft des Modells verbessert wird. Anschaulich kann man es sich vorstellen, dass nun die Zeitachse der Zustands-Zeitreihendaten der ersten WKA durch die Zeitkorrelations-Einheit an einigen Stellen gestreckt, verschoben oder gestaucht werden, bis sie mit den Zustands-Zeitreihendaten der zweiten WKA verglichen werden kann, also z.B. Leistungsspitzen korrekt aufeinander abgebildet werden. Dies ist äußerst vorteilhaft, da z.B. ein Leistungsverhältnis nur in dem Fall ein Wirbelschleppen-Indikator ist, in dem die Leistungserzeugung der beiden Turbinen basierend auf der gleichen Windfront verglichen wird, da die stochastische Natur des Windes beträchtliche Schwankungen in die Energieerzeugung einbringt.

Eine erfindungsgemäße Lern-Rechenvorrichtung umfasst einen Prozessor und einen Datenspeicher mit Instruktionen (insbesondere Programmabschnitten), welche dem Prozessor bei ihrer Ausführung ermöglichen, den Lern-Datensatz zu verarbeiten und die Regressionsverfahren koordiniert zu trainieren.

Die Lern-Rechenvorrichtung ist diesbezüglich dazu ausgelegt, einen ihr bereitgestellten Lern-Datensatz umfassend zumindest Zustands-Zeitreihendaten der Windkraftanlagen zu erfassen. Die Zustands-Zeitreihendaten geben also den Zustand einer Anzahl der WKA in dem Windkraftsystem (z.B. zweier WKA) in einem Zeitintervall an. Im Grunde kann mit lediglich zwei Zustands-Zeitreihendaten gearbeitet werden: Ein Datensatz von der ersten WKA und ein Datensatz der zweiten WKA. die zeitliche Länge des Zeitintervalls bestimmt dann die Qualität des Lernfortschritts. In der Praxis sollten mehrere Zustands-Zeitreihendaten der (beiden) WKA aus verschiedenen Zeitintervallen (mehreren Tagen, Wochen, Monaten oder Jahren) vorliegen, damit ein möglichst umfangreiches Training möglich ist.

Die Lern-Rechenvorrichtung ist diesbezüglich zudem dazu ausgelegt, eine Zeitkorrelations-Einheit und eine Zustandsvorhersage-Einheit nach dem erfindungsgemäßen Verfahren koordiniert zu trainieren. Das koordinierte Training ist dabei sehr wichtig, da die Zeitkorrelations-Einheit "Hand in Hand" mit der Zustandsvorhersage-Einheit zusammenarbeiten sollte, um die jeweils korrelierten Abschnitte der Zustands-Zeitreihendaten der WKA miteinander vergleichbar zu machen.

Eine erfindungsgemäße Ermittlungseinheit umfasst zumindest eine trainierte Zeitkorrelations-Einheit und/oder eine trainierte Zustandsvorhersage-Einheit. Mittels der Zeitkorrelations-Einheit können wichtige Erkenntnisse über die Windphysik eines Windkraftsystems abgeleitet werden mit der Zustandsvorhersage-Einheit der Zustand mindestens einer WKA vorausgesagt bzw. simuliert werden. In dem Fall, in dem eine Ermittlungseinheit eine trainierte Zeitkorrelations-Einheit aber keine Zustandsvorhersage-Einheit umfasst, kann sie auch als "Zeitkorrelations-Ermittlungseinheit" bezeichnet werden.

Die Ermittlungseinheit ist bevorzugt ein Teil einer Rechenvorrichtung eines Windkraftsystems, insbesondere Teil einer Steuervorrichtung. Vorzugsweise ist die Rechenvorrichtung zudem als Lern-Rechenvorrichtung ausgestaltet, so dass die Zeitkorrelations-Einheit bzw. die Zustandsvorhersage-Einheit mit dem erfindungsgemäßen Verfahrens stetig weitertrainiert werden kann.

Ein erfindungsgemäßes Ermittlungs-Verfahren zur automatischen Ermittlung des Einflusses einer von einer ersten Windkraftanlage verursachten Wirbelschleppe auf (mindestens) eine zweite Windkraftanlage eines Windkraftsystems, wobei die ersten Windkraftanlage bezüglich der Windrichtung vor der zweiten Windkraftanlage steht, umfasst die folgenden Schritte:

- Bereitstellung einer erfindungsgemäßen Ermittlungseinheit umfassend eine trainierte Zustandsvorhersage-Einheit. Diese Ermittlungseinheit kann, wie oben bereits erwähnt z.B. auf oder an einer Rechenvorrichtung bereitgestellt werden, die bevorzugt zusätzlich als erfindungsgemäße Lern-Rechenvorrichtung und/oder als Steuereinrichtung für eine WKA ausgestaltet ist.

- Bereitstellung eines Datensatzes umfassend (vorzugsweise aktuelle) Zustands-Zeitreihendaten zum Zustand zumindest der ersten Windkraftanlage. Diese Zustands-Zeitreihendaten sollten vorzugsweise Informationen zu der Leistung der ersten WKA und zur Propagation einer Windfront umfassen, z.B. Windrichtung, Windstärke.

- Voraussage des Zustandes der hinteren, zweiten Windkraftanlage mittels der trainierten Zustandsvorhersage-Einheit auf Basis der Zustands-Zeitreihendaten des Datensatzes. Dabei sollten insbesondere Voraussagen zu ihrer Leistung oder zum Leistungsverhältnis zur vorderen Windkraftanlage im Vordergrund stehen.

Ein erfindungsgemäßes Windfeld-Ermittlungs-Verfahren zur automatischen Ermittlung der Struktur eines Windfeldes in einem Windkraftsystem umfasst die folgenden Schritte:

- Bereitstellung einer erfindungsgemäßen Zeitkorrelations-Ermittlungseinheit umfassend eine trainierte Zeitkorrelations-Einheit. Diese Zeitkorrelations-Ermittlungseinheit kann, wie oben bereits erwähnt z.B. auf einer Rechenvorrichtung bereitgestellt werden, die bevorzugt zusätzlich als erfindungsgemäße Lern-Rechenvorrichtung und/oder als Steuereinrichtung für eine WKA ausgestaltet ist.

- Bereitstellung eines Datensatzes umfassend (vorzugsweise aktuelle) Zustands-Zeitreihendaten zum Zustand zumindest der ersten Windkraftanlage. Diese Zustands-Zeitreihendaten sollten vorzugsweise Informationen zur Propagation einer Windfront umfassen, z.B. Windrichtung, Windstärke.

- Voraussage des Zustandes des Windfeldes in einem Bereich des Windkraftsystems.

Ist der Zeitpunkt des Auftreffens einer Wirbelschleppe einer Windfront einer vorgelagerten WKA auf eine nachgeschaltete WKA bekannt, was das erfindungsgemäße Windfront-Ermittlungs-Verfahren leisten kann, ist es sogar möglich, die Parameter der stromabwärts gelegenen WKA durch Steuerung oder Regelung anzupassen, um die erwarteten negativen Auswirkungen abzuschwächen.

Es ist aber auch ohne explizite Voraussagen des Verhaltens einer Windfront möglich, die Auswirkungen einer Wirbelschleppe zu berechnen (bzw. zu simulieren) und die Parameter der vorgeschalteten Turbine so zu ändern, dass negative Effekte auf die zweite WKA abgeschwächt oder sogar vermieden werden.

Ein erfindungsgemäßes Steuerverfahren dient zur automatischen Steuerung einer ersten Windkraftanlage und/oder einer zweiten Windkraftanlage eines Windkraftsystems, wobei die erste Windkraftanlage bezüglich der Windrichtung wieder vor der zweiten Windkraftanlage steht. Zur Steuerung werden basierend auf der Voraussage des Zustandes der zweiten Windkraftanlage mittels eines erfindungsgemäßen Ermittlungs-Verfahrens Steuerdaten für eine Windkraftanlage erzeugt. Das Steuerverfahren ist dabei bevorzugt zur Steuerung der ersten Windkraftanlage ausgestaltet. Dies hat den Vorteil, dass durch eine geeignete Steuerung dieser ersten Windkraftanlage deren Einfluss auf die zweite Windkraftanlage energetisch optimiert werden kann, z.B. durch eine entsprechende Einstellung des Anstellwinkels der Rotorblätter oder den Drehwinkel der Gondel.

Eine erfindungsgemäße Steuereinrichtung zur Steuerung eines Windkraftsystems ist zur Durchführung eines erfindungsgemäßen Steuerverfahrens ausgestaltet. In der Praxis sollte die Steuereinrichtung mit Datenschnittstellen für eine Datenkommunikation mit einer Windkraftanlage (und ggf. Datenschnittstellen oder einem Steuerpult zur manuellen Steuerung) und einer Rechenvorrichtung ausgestattet sein.

Ein erfindungsgemäßes Windkraftsystem umfasst eine erfindungsgemäße Steuereinrichtung.

Ein Großteil der zuvor genannten Komponenten der Lern-Rechenvorrichtung, der Ermittlungseinheit bzw. der Steuereinrichtung, können ganz oder teilweise in Form von Softwaremodulen in einem Prozessor einer entsprechenden Vorrichtung bzw. Steuereinrichtung realisiert werden. Eine weitgehend softwaremäßige Realisierung hat den Vorteil, dass auch schon bisher verwendete Vorrichtungen bzw. Steuereinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem bzw. eine Speichereinrichtung einer Steuereinrichtung eines Windkraftsystems bzw. einer WKA ladbar ist, mit Programmabschnitten, um alle Schritte der erfindungsgemäßen Verfahren auszuführen, wenn das betreffende Programm in dem Rechensystem bzw. der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zum Rechensystem bzw. zur Steuereinrichtung und/oder zur Speicherung an oder in dem Rechensystem bzw. der Steuereinrichtung kann ein computerlesbares Medium, beispielsweise ein Memorystick, eine Festplatte oder ein sonstiger transportabler oder fest eingebauter Datenträger dienen, auf welchem die von einem Rechensystem bzw. einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Bevorzugt ist daher auch eine Ermittlungseinheit in Form eines Computerprogrammprodukts mit einem Computerprogramm, welches direkt in eine Speichereinrichtung eines Rechensystems oder einer Steuereinrichtung eines Windkraftsystems bzw. einer WKA ladbar ist, mit Programmabschnitten, um alle Schritte des erfindungsgemäßen Ermittlungs-Verfahrens bzw. Steuerverfahrens auszuführen, wenn das Computerprogramm in dem Rechensystem oder der Steuereinrichtung ausgeführt wird.

Bevorzugt ist eine Ermittlungseinheit in Form eines computerlesbaren Mediums, auf welchem von einer Rechnereinheit lesbare und ausführbare Programmabschnitte gespeichert sind, um alle Schritte eines erfindungsgemäßen Ermittlungs-Verfahrens auszuführen, wenn die Programmabschnitte von der Rechnereinheit ausgeführt werden. Die Ermittlungseinheit kann in Form dieses computerlesbaren Mediums auch als Hardware vorliegen, z.B. als programmierter EPROM oder als FPGA (Programmierbare Matrix, engl.: "Field Programmable Gate Array").

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bei einem besonders bevorzugten Ausführungsbeispiel wird die Zeitkorrelations-Einheit dermaßen trainiert, dass Zustands-Zeitreihendaten der ersten Windkraftanlage zur Erstellung von zeitangepassten Zustands-Zeitreihendaten (zunächst) mit Hilfe der trainierten Zeitkorrelations-Einheit auf die Zustands-Zeitreihendaten des Lern-Datensatzes der zweiten Windkraftanlage angepasst werden können. Dies kann z.B. mittels Zerren bzw. Stauchen der Zeitachse geschehen und/oder durch Verschiebungen der Zeitachse. Koordiniert mit dem vorgenannten Training wird die Zustandsvorhersage-Einheit unter Nutzung der zeitangepassten Zustands-Zeitreihendaten so trainiert, dass mittels der trainierten Zustandsvorhersage-Einheit ein Zustand der zweiten Windkraftanlage auf Basis von Zustands-Zeitreihendaten der ersten Windkraftanlage geschätzt werden kann. Insbesondere können zeitangepassten Zustands-Zeitreihendaten in diesem Rahmen "geglättet" werden, um sie im Training an Zustands-Zeitreihendaten der zweiten WKA anzupassen.

Bevorzugt umfassen die Zustands-Zeitreihendaten eine zeitliche Reihe von Parameterwerten zumindest eines Parameters oder einer Kombination von Parametern der folgenden Gruppe:

- Leistung (besonders bevorzugt),

- Umgebungsbedingungen, insbesondere Temperatur und/oder Luftdruck,

- Parameter, welche Informationen über den inneren Zustand einer Windkraftanlage umfassen, insbesondere der aktuelle Neigungswinkel der Rotorblätter, die Gondelausrichtung (z.B. Gierposition), Drehzahl und/oder Turbinensteuerung (z.B. Pitching, Änderung der Gierposition),

- Parameter, welche Informationen über ein Windfeld, bevorzugt eine Windpropagation umfassen, insbesondere eine Windgeschwindigkeit und/oder Informationen über Turbulenzen, (ebenfalls besonders bevorzugt).

Bevorzugt basiert ein Regressionsverfahren auf einem Neuronalen Netzwerk, insbesondere einem bayes'schen Netzwerk oder einem Gaußprozess (s.o.).

Bei einem bevorzugten Ermittlungs-Verfahren, umfasst die Ermittlungseinheit zusätzlich eine trainierte Zeitkorrelations-Einheit. Mittels dieser werden die Zustands-Zeitreihendaten der ersten Windkraftanlage zunächst zeitlich angepasst. Danach wird basierend auf den dermaßen bearbeiteten zeitangepassten Zustands-Zeitreihendaten mittels der Zustandsvorhersage-Einheit der Zustand der zweiten Windkraftanlage vorausgesagt.

Bevorzugt wird (ggf. im Rahmen des Ermittlungs-Verfahrens) die Zustandsvorhersage-Einheit und/oder die Zeitkorrelations-Einheit weiter mit einem erfindungsgemäßen Verfahren trainiert. Das Training geschieht dabei bevorzugt während und/oder nach Durchführung der Ermittlung. Insbesondere werden die dem Ermittlungsverfahren zugrundeliegende Datensätze in dieser Hinsicht als Lern-Datensätze angesehen.

Die Lern-Rechenvorrichtung kann in diesem Fall z.B. durch diejenige Rechenvorrichtung gebildet werden, die auch das Ermittlungs-Verfahren durchführ. Es kann aber auch eine eigenständige Lern-Rechenvorrichtung verwendet werden.

Die Zeitkorrelations-Einheit und die Zustandsvorhersage-Einheit werden zur Verbesserung ihres Trainingszustandes dem erfindungsgemäßen (Lern-)Verfahren wieder zur Verfügung gestellt. Mittels des vorgenannten aktuellen Lern-Datensatzes erfolgt dann wieder ein koordiniertes Trainieren der Zeitkorrelations-Einheit und der Zustandsvorhersage-Einheit gemäß eines Prinzips des maschinellen Lernens von Regressionsverfahren.

Die Ermittlungseinheit umfasst danach die verbessert trainierte Zustandsvorhersage-Einheit und ggf. die verbessert trainierte Zeitkorrelations-Einheit.

Bevorzugt wird im Rahmen der Voraussage des Zustandes der zweiten Windkraftanlage deren Leistung vorausgesagt. Des Weiteren wird bevorzugt das Leistungsverhältnis (z.B. als Quotient) auf der Basis der Leistung der ersten Windkraftanlage und der vorausgesagten Leistung der zweiten Windkraftanlage ermittelt.

Ein bevorzugtes Steuerverfahren umfasst die Schritte:

- Bereitstellung einer Steuerdaten-Bibliothek, in der Steuerdaten für ein Windkraftsystem hinterlegt sind, welche mit Zuständen der Windkraftanlagen datentechnisch (z.B. semantisch) verknüpft sind. Steuerdaten sind Daten, die dazu ausgelegt sind, Komponenten (z.B. mittels Elektromotoren) einer WKA zu steuern. Beispielsweise umfassen Steuerdaten Adressen zum gezielten Ansprechen einer Komponente und Parameter zur Angabe der Art und/oder zeitlichen Länge der Steuerung (z.B. wie weit ein Rotorblatt gedreht werden soll).

- Auswahl eines Steuerdatensatzes gemäß des durch die Zustandsvorhersage-Einheit im Rahmen eines erfindungsgemäßen Ermittlungs-Verfahrens vorausgesagten Zustands der hinteren Windkraftanlage, insbesondere gemäß eines vorausgesagten Leistungsverhältnisses.

- Verwendung des ausgewählten Steuerdatensatzes zur Steuerung des Windkraftsystems.

Die Steuerparameter können gemäß einer bevorzugten Ausführungsform mittels Minimierung einer Kostenfunktion ermittelt werden. Dabei können miteinander vergleichbare Zustände der beiden Windkraftanlagen (z.B. deren Leistung) in eine zu minimierende Größe in die Kostenfunktion einfließen und Strafterme der Kostenfunktion Voraussagen zur Wirbelschleppe einer Windfront umfassen.

Wie oben bereits ausgeführt wurde, erfolgt bevorzugt eine adaptive Steuerung der ersten Turbine, um negative Auswirkungen auf die Stromerzeugung zu mildern. Es kann aber auch eine Steuerung der zweiten Turbine erfolgen, wobei in diesem Falle eine Zeitkorrelations-Einheit die Windpropagation angeben sollte, um die Steuerung optimal an die Windverhältnisse, insbesondere dann den korrekten Zeitpunkt, anzupassen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1      eine Skizze eines eindimensionalen dynamischen Systems,

Figur 2      eine Informationsausbreitung anhand eines einfachen Beispiels,

Figur 3      eine Informationsausbreitung anhand eines komplexeren Beispiels,

Figur 4        ein einfaches Modell zur Voraussage der Zeitreihe von Turbine B für die Zeitreihe von Turbine A,

Figur 5        ein Modell zur Voraussage der Zeitreihe $b_t$ aus $a_t$ mittels einer Zeitkorrelationsfunktion L und einer Zustandsvorhersage-Funktion f,

Figur 6        eine schematische Darstellung eines Teils eines Windkraftsystems umfassend zwei Windkraftanlagen,

Figur 7        eine schematische Darstellung eines ersten Ausführungsbeispiels des erfindungsgemäßen Verfahrens zur Herstellung einer erfindungsgemäßen Ermittlungseinheit,

Figur 8        eine schematische Darstellung eines Ausführungsbeispiels einer bevorzugten Lern-Rechenvorrichtung,

Figur 9        einen Ablaufplan für einen möglichen Ablauf eines Ausführungsbeispiels eines erfindungsgemäßen Ermittlungs-Verfahrens,

Figur 10       eine grob schematische Darstellung einer Steuereinrichtung für eine Windkraftanlage.

Figur 1 skizziert ein eindimensionales dynamisches System mit einem Informationsfluss von links nach rechts und drei Messpunkten A, B und C, die in diesem Beispiel als äquidistant angenommen werden. Die latenten Funktionen f und g beschreiben die makroskopischen Beziehungen zwischen Paaren von Messpunkten.

Dieses Modell soll das Lernen latenter Funktionen veranschaulichen, die den Zusammenhang zwischen Zeitreihen beschreiben. Diese Zeitreihen werden als Messdaten in einem dynamischen System angesehen, das durch eine unbekannte bzw. komplizierte Differentialgleichung bestimmt wird. Die verschiedenen Zeitreihen entsprechen zwei Messungen zu verschiedenen Punkten (verschiedenen "Messpunkten" A, B, C) im zugrundeliegenden Raum.

Während die konkrete Dynamik des Systems unbekannt sein kann, gilt die zentrale Annahme, dass es eine Richtung gibt, in der sich Informationen im System ausbreiten (Pfeilrichtung). Der Begriff "Information" soll hier eine abstrakte Einheit der Veränderung der Dynamik beschreiben und kann als latenter Zustand der Dynamik verstanden werden, die Messdaten bedingt und sich durch das System ausbreitet.

Die Linie des Pfeils stellt den zugrundeliegenden Indexraum dar, z.B. die reellen Zahlen. An den drei Punkten A, B und C in diesem Indexraum wird das dynamische System zu diskreten Zeitpunkten t beobachtet, was zu den drei Zeitreihen $a_t$, $b_t$ und $c_t$ führt (s. dazu auch Figuren 2 und 3). In diesem Beispiel wird angenommen, die Dynamik würde von links nach rechts propagieren, wobei Informationen auf der linken Seite (die nicht betrachtet wird) in das System eintreten und sich mit endlicher Geschwindigkeit durch das System ausbreiten und A, B und C genau einmal und in dieser Reihenfolge passieren, was drei Beobachtungen hervorruft, die voneinander in der Richtung abhängen.

Formal wird mit $\perp$, welches eine (bedingte) Unabhängigkeit angibt, angenommen, dass für alle t,

$$a_t \perp b_t \mid a_0, \ldots, a_{t-1}, \text{ aber} \qquad (1)$$

$$a_t \not\perp b_t \mid b_0, \ldots, b_{t-1}. \qquad (2)$$

Eine ähnliche Struktur wird für die Beziehung zwischen $b_t$ und $c_t$ angenommen, mit dem Zusatz, dass

$$c_t \perp a_0, \ldots, a_t \mid b_0, \ldots, b_t. \qquad (3)$$

Dies bedeutet, dass jede Information, die durch A gegangen ist, ist auch durch B gegangen ist. Es ist zu beachten, dass diese Struktur nur für Paare von Beobachtungspunkten und nicht für alle anderen Punktepaare im zugrundeliegenden Raum angenommen werden kann. Im Wesentlichen wird angenommen, dass Informationspakete sich von links nach rechts durch das System bewegen und Beobachtungen an den Messpunkten verursachen. Informationspakete können im Allgemeinen die Positionen wechseln oder an irgendeinem Punkt im zugrundeliegenden Raum außer den Messpunkten zusammengeführt werden, und nachdem sie eine Beobachtung verursacht haben, können sie sich nicht rückwärts bewegen, da die Messpunkte als "Informationsdioden" dienen.

Das Ziel dieses Modells besteht nicht darin, das dynamische System in seiner Gesamtheit zu modellieren, d.h. die zugrunde liegenden Differentialgleichungen zu lernen (oder zu approximieren), da diese Aufgabe vermutlich aufwändig und rechenintensiv ist. Stattdessen besteht das Ziel darin, die makroskopischen Beziehungen zwischen den verschiedenen Beobachtungspunkten zu modellieren, und zwar sowohl zeitlich (d.h. die Zeitreihen zueinander auszurichten) als auch funktional (unter Verwendung einer Zeitreihe, um die andere vorherzusagen).

Da dies kein Wissen über das Verhalten des Systems an beliebigen Punkten offenbart, muss das Modell nicht jedes Detail des Systems erfassen, um Vorhersagen über die Messpunkte zu treffen.

Figur 2 zeigt eine Informationsausbreitung anhand eines einfachen Beispiels. Ausgehend von konstanten Ausbreitungsgeschwindigkeiten ist es einfach, ein Lernproblem zu formulieren und Trainingssätze aus beobachteten Zeitreihen zu extrahieren. Entsprechende Beobachtungen an verschiedenen Messpunkten können direkt berechnet werden und ihre Struktur ändert sich nicht mit der Zeit.

Das mit dem in Figur 1 gezeigten System verbundene Lernproblem besteht darin, diejenigen latenten Funktionen f und g zu lernen, die die Beziehung zwischen A und B bzw. B und C angeben. Es wird diesbezüglich angenommen, eine Information liefe mit bekannter und konstanter Geschwindigkeit von links nach rechts durch das System und benötige genau einen Zeitschritt von A nach B und von B nach C, wie in Abbildung 2 dargestellt. Es wird weiterhin angenommen, die Zeitreihen hätten keine autoregressive Komponente, so dass gilt:

$$a_t \perp a_{t+1} \text{ für alle } t \text{ und ähnlich für } b_t \text{ und } c_t.$$

Das Problem kann dann so formuliert werden, dass die generativen Funktionen f und g so gesucht werden, dass für alle t (mit den Rauschtermen $\varepsilon f$ und $\varepsilon g$) gilt:

$$b_{t+1} = f(a_t) + \varepsilon f \text{ und } c_{t+2} = g(b_{t+1}) + \varepsilon g. \tag{4}$$

Da die Zeitabhängigkeiten bekannt sind, ist bei drei Reihen $a_t$, $b_t$ und $c_t$ ein Trainingssatz durch $\mathcal{D} = \{(a_t, b_{t+1}, c_{t+2})\}_t$ gegeben. Modelle können unter Verwendung von Standardtechniken wie Teilen der verfügbaren Daten in Trainings- und Testdatensätzen evaluiert werden. Diese Art von Problemen kann unter Verwendung von Standardtechniken zum maschinellen Lernen gelöst werden.

Verallgemeinerungen wie autoregressive Komponenten oder Zeitverzögerungen können auf einfache Art und Weise integriert werden, beispielsweise unter Verwendung von rekurrenten neuronalen Netzen.

Die Schlüsselverallgemeinerung dieses Modells besteht darin, dass die Geschwindigkeit, mit der sich Information durch das System ausbreitet, weder in der Zeit (für verschiedene Werte von t) noch im Raum (an einer anderen Position im zugrundeliegenden Raum) als bekannt oder konstant angenommen wird. Stattdessen wird angenommen, dass sie durch eine bekannte minimale und eine maximale Geschwindigkeit begrenzt ist, die sowohl streng positiv als auch kleiner als unendlich sind, und ansonsten auf eine unbekannte Weise von der Systemdynamik abhängig sind. Aufgrund ihrer unterschiedlichen Ausbreitungsgeschwindigkeiten können sich Informationspakete gegenseitig überholen.

Figur 3 zeigt ein weiteres Beispiel für eine Informationsausbreitung. Unter Annahme von variablen und latenten Ausbreitungsgeschwindigkeiten können entsprechende Beobachtungen an verschiedenen Messpunkten nicht einfach wiederhergestellt werden. Während die latenten Funktionen f und g über die Zeit konstant bleiben, ist das Auffinden von Input-Output-Paaren selbst ein Lernproblem.

In Figur 3 ist die Beziehung (oder Ausrichtung) zwischen den verschiedenen Zeitreihen nun komplizierter als in Figur 2:

Während die latenten Funktionen f und g nur noch von der Systemdynamik abhängen und sich daher im Laufe der Zeit nicht verändern, werden die Zusammenhänge der Beobachtungen in den unterschiedlichen Zeitreihen durch die variable Zeit gesteuert, die benötigt wird, damit sich Information zwischen den Messpunkten ausbreiten kann.

Das Lernproblem kann dennoch als generatives Problem formuliert werden: Für die gegebenen Zeitreihen $a_t$, $b_t$ und $c_t$, sollen Modelle für f und g gefunden werden, die am genauesten die Zeitreihen $b_t$ und $c_t$ generieren können. Die Frage ist nun, wie man beurteilen kann, ob eine gefundene Funktion korrekt ist.

Wenn die korrekten Laufzeiten (und daher die Zusammenhänge zwischen Zeitreihen) bekannt sind, ist dieses Problem äquivalent zu dem oben beschriebenen, da Trainings- und Testdatensätze leicht extrahiert werden können. Wenn sie unbekannt sind, erfordert die Beurteilung, ob eine latente Funktion eine gute Wahl ist, immer noch Kenntnisse über entsprechende Paare von Eingaben (z. B. von $a_t$) und Ausgaben (von $b_t$) zur Auswertung.

Da jede aus dem dynamischen System beobachtete Zeitreihe keine Informationen über die korrekten Ausbreitungszeiten enthält, ist es nicht möglich, Vorhersagen der latenten Funktionen zu beurteilen, ohne zuerst die Ausbreitungszeiten zu bestimmen, was die Modellbewertung zu einer schwierigen Aufgabe macht. Mit anderen Worten, das Problem des Lernens über die Dynamik in Bezug auf die latente Funktion impliziert automatisch, dass es notwendig ist, korrekte Ausbreitungszeiten zu finden, unabhängig von einer anderen Wahl der Modellierung. Der Hauptbeitrag dieses Modells besteht darin, beide Probleme gleichzeitig zu lösen.

Bis hier wurde das von dem Modell zu lösende Problem in einer eher generalisierten Art und Weise dargestellt. Im Folgenden werden basierend auf diesen allgemeinen dynamischen Systemen eine spezifische Anwendung bezüglich Windkraftanlagen abgeleitet.

Ein Windpark stellt ein komplexes dynamisches System dar. Es ist rechnerisch nicht möglich, das Verhalten eines kompletten Windparks und insbesondere die Ausbreitung verschiedener Windfronten durch den Park zu simulieren. Diese Windfronten sollen einen Eindruck der Richtung geben.

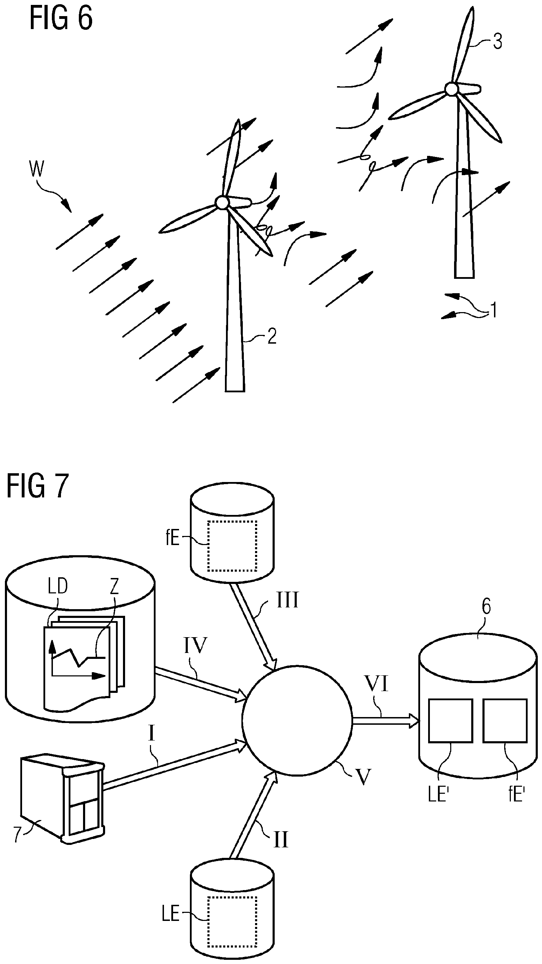

Betrachtet wird ein Paar von Turbinen A und B, wie es z.B. in Figur 6 dargestellt ist. In Figur 6 sind die Windkraftanlagen mit den Bezugszeichen 2 und 3 versehen, Da die Turbinen hier die Funktion der Messpunkte innehaben, wird zur anschaulicheren Beschreibung des Systems weiter die Bezeichnung A und B verwendet.

Turbine B ist in Bezug auf die vorherrschende Windrichtung hinter der Turbine A angeordnet. Dann interagieren die Windfronten zuerst mit der Turbine A und interagieren nach einer gewissen Laufzeit mit der Turbine B.

Um die Stärke der Wirbelschleppe vorauszusagen, welcher die Turbine B aufgrund der Wechselwirkung zwischen Wind und Turbine A ausgesetzt ist, müssen entsprechende Windereignisse in den Beobachtungen bezüglich der Turbinen A und B identifiziert werden, was das oben beschriebene Problem darstellt. Da die Windgeschwindigkeit zwischen den Turbinen nicht konstant (oder bekannt) ist, sind die zugehörigen Beobachtungen ineinander verschachtelt, wie in Figur 3 gezeigt.

Anschaulich lässt sich Figur 3 wie folgt darstellen: Es interagiert eine grüne Wolke (oder korrekterweise Windfront) mit Turbine A zu Zeitpunkt t=1 und eine blaue Wolke mit Turbine A zu Zeitpunkt t=2. Da die beiden Wolken sich nicht mit der gleichen Geschwindigkeit zwischen den Turbinen A und B bewegen, und es nicht möglich ist, diese Geschwindigkeit zu wissen oder beobachten, ist es a priori nicht bekannt, wann diese Wolken die Turbine B erreichen werden. In Figur 3 trifft die grüne Wolke auf die Turbine B zum Zeitpunkt t=4 ein und interagierte mit dieser. Die blaue Wolke erreichte diese bereits zum Zeitpunkt t=3, da sie sich mit höherer Geschwindigkeit fortbewegt hat.

Das Herstellen eines solchen korrekten Zusammenhangs ist entscheidend, wenn man versucht, zu bewerten (oder vorherzusagen), ob Turbine B von einer Wirbelschleppe beeinflusst wird. Da der Wind, der die Turbinen erreicht, sehr stochastisch ist, ist es notwendig, die Beobachtungen zu vergleichen, die von den gleichen Windfronten (oder farbigen Wolken) an den beiden Turbinen verursacht werden.

Die an den Windturbinen gesammelten Beobachtungen werden in Form von Zeitreihendaten generiert (die hier wieder als $a_t$, $b_t$ und $c_t$ bezeichnet werden). Dies bedeutet, dass in regelmäßigen Abständen, beispielsweise einmal pro Sekunde, der aktuelle Wert der verfügbaren Sensordaten in eine Datenbank (beliebiger Form) geschrieben wird und zur Verfügung steht. Mit anderen Worten, die Datenbank kann Fragen beantworten wie z.B.: "Wie viel Energie wurde am 5. Januar 2018 um 08:27:30 Uhr von Turbine A erzeugt?". Die erfassten Sensorwerte können grob wie folgt eingeordnet werden:

Umgebungsbedingungen, z.B. Temperatur Feuchtigkeit, etc.

Turbinenzustand z.B. Gierposition, erzeugte Leistung, Drehzahl, etc.

Turbinensteuerung, z.B. Pitching, kleine Änderungen in Gieren, etc.

Diese Daten werden für beide Turbinen A und B gesammelt und die jeweiligen Zeitstempel sind vergleichbar.

Der Prozess des Identifizierens, welche Beobachtungen der verschiedenen Turbinen einander entsprechen, wird als Finden eines Zusammenhangs zwischen den zwei Zeitreihen bezeichnet.

Bei einem solchen Zusammenhang können die ursprünglichen Zeitreihendaten in einen Zustand umgewandelt werden, der Fragen der Form beantwortet: "Wie viel Leistung hat die Turbine B zu dem Zeitpunkt produziert als der Wind an der Turbine A am 5. Januar 2018 um 08:27:30 Uhr die Turbine B erreichte?". Die Beantwortung dieser Frage ist wichtig, da aufgrund der miteinander zusammenhängenden Leistungserzeugung der beiden Turbinen A und B eine Beurteilung der Intensität der Wirbelschleppe möglich ist.

Bei einem solchen Datensatz kann ein Modell (die Funktion f) trainiert werden, um beispielsweise die Stromerzeugung der Turbine B nur auf Basis der Messdaten der Turbine A wiederzugeben, auch wenn der Wind, der zu diesem Zeitpunkt an Turbine A herrscht, Turbine B noch nicht erreicht hat.

In bereits bekannten Lösungen für dieses Problem werden die Schätzungen der Propagationszeit des Windes zwischen den Turbinen A und B (und somit der gewählte Zusammenhang) von Experten entworfen und nicht aus den Daten gelernt. Da der korrekte Zusammenhang jedoch unbekannt ist und weder mit physikalischen Berechnungen (die zu kompliziert sind) noch mit numerischen Ansätzen (die sehr zeitaufwendig sind) wiederhergestellt werden kann, sind diese von Experten entworfenen Ausrichtungen nicht sehr zuverlässig.

Der Hauptbeitrag des der Erfindung zugrundeliegenden Modells besteht darin, dass der Zusammenhang aus den Daten extrahiert wird, indem gleichzeitig sowohl dieser Zusammenhang als auch die Funktion f ohne Expertenwissen gelernt werden.

Mit einem Paar Zeitreihen $a_t$ und $b_t$, von zwei Turbinen A und B löst dieses Modell das Problem des Erzeugens von $b_t$ unter Verwendung einer zeitunabhängigen Zustandsvorhersage-Funktion f und einer Zeitkorrelations-Funktion L, die die abgeleiteten Laufzeiten von A nach B für jeden Datenpunkt codiert. Die zentralen Annahmen lauten wie folgt:

1. Die Zeitkorrelations-Funktion L sagt bezüglich eines an Turbine A gemessenen Windes die Laufzeit zu der Turbine B voraus.

2. Bei richtiger Zeitkorrelation sagt die Zustandsvorhersage-Funktion f den Zustand der Turbine B voraus, sobald der aktuell bei A gemessene Wind B erreicht.

3. Die Beziehung zwischen $a_t$ und $b_t$ wird durch eine Zustandsvorhersage-Funktion f bestimmt.

4. Formal gehen wir davon aus, dass für jeden t und jeden Rauschterm $\varepsilon$ gilt:

$$b_t = f(a_{t-lt}) + \varepsilon, \qquad\qquad (5)$$

wobei $l_t$ die mit dem Zeitschritt t verbundene unbekannte Laufzeit ist.

Alle Laufzeiten $l_t$ sind positiv. Dies bedeutet, dass der Wind immer zunächst mit A und erst dann mit B wechselwirkt. Die Laufzeiten $l_t$ liegen zwischen einigen vorbekannten minimalen und maximalen Werten $0 < l_{min} \leq l_t \leq l_{max} < \infty$

Wie oben erwähnt, machen andere Ansätze zu diesem Problem einfache Annahmen über die Struktur der Zeitkorrelations-Funktion L. Dies führt zu sehr viel einfacheren Anforderungen an das Training, da dann nur die Zustandsvorhersage-Funktion f unbekannt ist. Das Problem wird dann normalerweise mit Standard-Regressionsmodellen wie neuronalen Netzen oder Gauß-Prozessen modelliert.

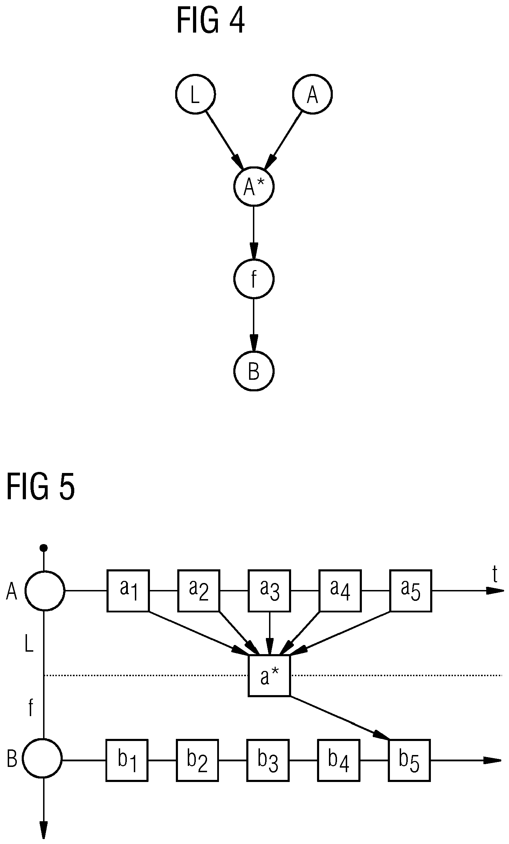

Im Gegensatz dazu lernt das erfindungsgemäße Modell beide Funktionen L und f gleichzeitig aus Daten. Abbildung 4 zeigt ein grafisches Modell des resultierenden Lernproblems. Das hier dargestellte Modell sagt die Zeitreihe von Turbine B für die Zeitreihe von Turbine A voraus. A und B sind dabei Messdaten. Diese Vorhersage ist aufgeteilt in die Zeitkorrelations-Funktion L, die die Beobachtungen basierend auf gleichen Windfronten verknüpft, und die Zustandsvorhersage-Funktion f, die die Interaktionen zwischen den beiden Turbinen beschreibt und beispielsweise zur Vorhersage von Wirbelsituationen verwendet werden kann. Beide Funktionen werden mit Neuronalen Netzwerken, z.B. bayesischen Regressionsverfahren wie Gaußschen Prozessen, aus den Daten gelernt.

Basierend auf den zwei Zeitreihen der Turbinen A und B sollen die beiden Funktionen L und f gelernt werden. Dazu wird die Zeitkorrelations-Funktion L verwendet, um die beiden Zeitreihen auszurichten (was zu einer implizit zeitkorrelierten Zeitreihe A* der Beobachtungen von A führt). Dieses Ergebnis wird dann dazu verwendet, um die Zeitreihe B vorherzusagen.

Abbildung 5 zeigt den Prozess für einen bestimmten Datenpunkt $b_5$. Mit einer Zeitkorrelations-Funktion L, die das Wissen über die Laufzeit und eine Zustandsvorhersage-Funktion f codiert, sagt das Modell die Zeitreihe $b_t$ aus $a_t$ voraus, indem es zuerst den abgeleiteten Wert a* mit L bestimmt und dann die Zustandsvorhersage-Funktion f anwendet.

Um $b_5$ vorherzusagen (was zum Beispiel die erzeugte Leistung der Turbine B im Zeitschritt $t_5$ sein könnte), berücksichtigt die Zeitkorrelations-Funktion L alle plausiblen Beobachtungen von A (spezifiziert durch die bekannten Grenzen $l_{min}$ und $l_{max}$) und wählt aus die korrekte Beobachtung a* von A, die der gewünschten Windfront bei $b_5$ entspricht. Dieser Wert a* wird dann verwendet, um den Wert von $b_5$ unter Verwendung der Zustandsvorhersage-Funktion f vorherzusagen.

Bei der Ausbildung dieser Modelle ist besondere Vorsicht geboten, da sich die beiden Funktionen L und f stark gegenseitig beeinflussen. Eine falsche Wahl der Ausrichtung macht eine Zustandsvorhersage unmöglich, da das Modell dann Vorhersagen basierend auf irrelevanten Informationen treffen würde. Und umgekehrt, wenn die Zustandsvorhersage schlecht ist, ist das Finden der korrekten Ausrichtung sehr kompliziert. Aus diesem Grund werden bevorzugt bayes'sche Methoden verwendet, die nicht nur Vorhersagen generieren können, sondern auch den diesbezüglichen Grad an Sicherheit angeben.

In diesem Fall ist diese Eigenschaft von entscheidender Bedeutung, da beispielsweise mit sehr unsicherem Wissen über die wahre Zeitkorrelation begonnen wird und daher nur sehr ungenaue Vorhersagen über die Zustandsvorhersage-Funktion getroffen werden können. Im Laufe der Zeit werden jedoch sowohl die Zeitkorrelations-Funktion L als auch die Zustandsvorhersage-Funktion f in Bezug auf ihre Vorhersagen merklich besser, was schließlich zu einem korrekten Ergebnis führt.

Insbesondere werden sowohl die Zeitkorrelations-Funktion L als auch die Zustandsvorhersage-Funktion f unter Verwendung von Gauß-Prozessen modelliert und eine Unsicherheit über die Vorhersagen in der Zeitkorrelations-Funktion L muss durch die Zustandsvorhersage-Funktion f hindurch propagiert werden, was zu einem hierarchischen Gauß-Prozessmodell führt, die auch als "tiefe" Gaußsche Prozesse bekannt sind.

Nach erfolgreichem Training können beide Teile des Modells einzeln verwendet werden: Die Zeitkorrelations-Funktion L kann mit Experten geteilt werden, die sich über die physikalischen Eigenschaften des Windparks oder des spezifischen Turbinenpaars informieren können. Sie kann auch verwendet werden, um die Modellplausibilität zu überprüfen.

Die Zustandsvorhersage-Funktion f kann bei neuen Beobachtungen von A verwendet werden, um beispielsweise die Energieerzeugung von Turbine B vorherzusagen, sobald der aktuell beobachtete Wind bei A die Turbine B erreicht. Daraus können neue Steuerungsstrategien für beide Turbinen A und B wie in der Erfindungsmeldung beschrieben abgeleitet werden.

Figur 6 zeigt eine schematische Darstellung eines Teils eines Windkraftsystems 1 umfassend zwei Windkraftanlagen 2, 3. Die erste Windkraftanlage 2 steht bezüglich der Windrichtung (Pfeile) vor der zweiten Windkraftanlage 3. Mit Pfeilen ist eine Windfront W zu drei verschiedenen Zeiten angedeutet, die sich in der Darstellung von der ersten Windkraftanlage 2 zur zweiten Windkraftanlage 3 bewegt. Ist die Windfront W vor dem Auftreffen auf die erste Windkraftanlage 2 noch vergleichsweise homogen, so bildet sich durch den Einfluss der ersten Windkraftanlage 2 in der Windfront W eine Wirbelschleppe (gebogenen Pfeile) aus. Die zweite Windkraftanlage 3 erreicht somit keine homogene Windfront W mehr, sondern eine verwirbelte, was sich auf die zweite Windkraftanlage 3 negativ auswirken kann. Zum Beispiel wird sie keine optimale Leistung erzeugen, jedoch kann es auch sein, dass die unregelmäßigen Windverhältnisse in der Wirbelschleppe, z.B. durch die unterschiedlich wechselnde Belastung der Rotorblätter, die Lebensdauer der zweiten Windkraftanlage 3 verringern bzw. deren Verschleiß erhöhen.

Figur 7 zeigt eine schematische Darstellung einer einfachen Ausführungsform des erfindungsgemäßen Verfahrens zur Herstellung einer erfindungsgemäßen Ermittlungseinheit 6. Mit einer solchen Ermittlungseinheit 6 könnte z.B. der Zustand der zweiten Windkraftanlage 3 aus Figur 6 bei unterschiedlichen Windverhältnissen und unterschiedlichen Stellungen der ersten Windkraftanlage 2 vorausgesagt werden.

In Schritt I erfolgt eine Bereitstellung einer Lern-Rechenvorrichtung 7, wobei die Lern-Rechenvorrichtung 7 zum koordinierten Trainieren zumindest zweier Regressionsverfahren basierend auf dem Prinzip des maschinellen Lernens ausgelegt ist.

In Schritt II erfolgt eine Bereitstellung einer Zeitkorrelations-Einheit LE, welche zur Ausführung eines ersten Regressionsverfahrens auf oder an der Lern-Rechenvorrichtung 7 ausgelegt ist. Diese Zeitkorrelations-Einheit LE ist dabei so ausgebildet, dass sie eine Zeitkorrelations-Funktion L zur Ermittlung der Korrelation von Zustandsdaten Z der ersten Windkraftanlage 2 mit der zweiten Windkraftanlage 3, darstellen kann.

In Schritt III erfolgt eine Bereitstellung einer Zustandsvorhersage-Einheit fE, welche zur Ausführung eines zweiten Regressionsverfahrens auf oder an der Lern-Rechenvorrichtung 7 ausgelegt ist. Diese Zustandsvorhersage-Einheit LE ist dabei so ausgebildet, dass sie eine Zustandsvorhersage-Funktion f für die Vorhersage eines Zustands zumindest der zweiten Windkraftanlage 3 basierend auf Zustandsdaten der ersten Windkraftanlage 2 darstellen kann.

In Schritt IV erfolgt eine Bereitstellung zumindest eines Lern-Datensatzes LD umfassend Zustands-Zeitreihendaten Z der Windkraftanlagen 2, 3.

Der Kreis, in den die drei Pfeile mit den Bezeichnungen I, II, III und IV münden, stellt den Schritt V, dar, in dem das Training erfolgt. Zur Erstellung der Ermittlungseinheit 6 müssen dabei sowohl die Zeitkorrelations-Einheit LE als auch die Zustandsvorhersage-Einheit fE trainiert werden. Dies erfolgt im Rahmen eines koordinierten Trainings der Zeitkorrelations-Einheit LE und der Zustandsvorhersage-Einheit fE gemäß eines Prinzips des maschinellen Lernens von Regressionsverfahren.

In Schritt VI erfolgt die Erstellung der Ermittlungseinheit (6), die hier sowohl die trainierte Zustandsvorhersage-Einheit fE' als auch die trainierte Zeitkorrelations-Einheit LE' umfasst.

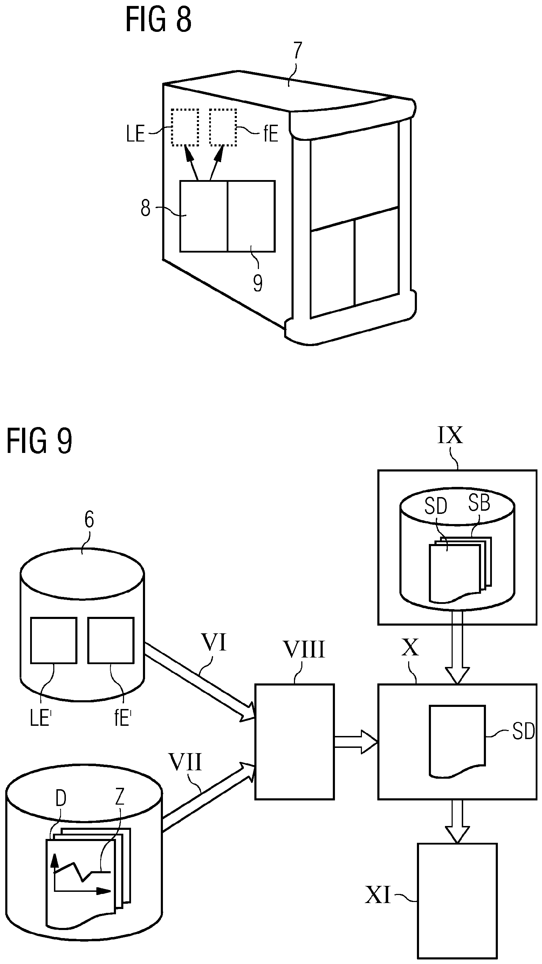

Figur 8 zeigt eine schematische Darstellung einer bevorzugten Lern-Rechenvorrichtung 7. Diese Lern-Rechenvorrichtung 7 umfasst einen Prozessor 8 und einen Datenspeicher 9, die hier als Blöcke dargestellt sind. Der Datenspeicher 9 enthält Instruktionen, welche dem Prozessor 8 bei ihrer Ausführung ermöglichen, einen der Lern-Rechenvorrichtung 7 bereitgestellten Lern-Datensatz LD umfassend zumindest Zustands-Zeitreihendaten Z der Windkraftanlagen 2, 3 zu erfassen, und eine Zeitkorrelations-Einheit LE und eine Zustandsvorhersage-Einheit fE nach dem erfindungsgemäßen Verfahren koordiniert zu trainieren.

Figur 9 zeigt einen Ablaufplan für einen möglichen Ablauf eines Ausführungsbeispiels eines erfindungsgemäßen Ermittlungs-Verfahrens.

In Schritt VI erfolgt eine Bereitstellung einer Ermittlungseinheit 6 die hier sowohl die trainierte Zustandsvorhersage-Einheit fE' als auch die trainierte Zeitkorrelations-Einheit LE' umfasst. Die Ermittlungseinheit 6 wurde beispielsweise nach einem in Figur 7 gezeigten Verfahren hergestellt.

In Schritt VII erfolgt eine Bereitstellung eines Datensatzes D umfassend Zustands-Zeitreihendaten Z zum Zustand zumindest der ersten Windkraftanlage 2. Diese Zeitreihendaten umfassen beispielsweise Informationen zur Leistung der ersten Windkraftanlage 2, die dort gemessene Windrichtung und Windgeschwindigkeit sowie insbesondere noch Angaben über die Parameter der Turbine wie z.B. Gondelausrichtung oder Anstellwinkel der Rotorblätter.

Der Datensatz D kann zusätzlich auch als Lern-Datensatz LD zur Fortbildung der Zustandsvorhersage-Einheit fE und/oder der Zeitkorrelations-Einheit LE nach einem Verfahren gemäß Figur 7 dienen.

Es erfolgt in Schritt VIII eine Voraussage des Zustandes der hinteren, zweiten Windkraftanlage 3 mittels der trainierten Zustandsvorhersage-Einheit fE' auf Basis der Zustands-Zeitreihendaten Z des Datensatzes D. Diese Zustands-Zeitreihendaten Z können mittels der trainierten Zeitkorrelations-Einheit LE' zeitlich an die Windverhältnisse an der Position zweiten Windkraftanlage 3 angepasst worden sein. Danach kann basierend auf den dermaßen bearbeiteten zeitangepassten Zustands-Zeitreihendaten Z* mittels der Zustandsvorhersage-Einheit fE der Zustand der zweiten Windkraftanlage 3 sehr akkurat vorausgesagt werden.

Bis zu diesem Schritt wäre ein beispielhaftes Ermittlungs-Verfahren dargestellt. Mit der automatischen Ermittlung des Einflusses einer von der ersten Windkraftanlage 2 verursachten Wirbelschleppe auf die zweite Windkraftanlage kann aber auch eine automatische Steuerung einer Windkraftanlage 2, 3 einhergehen, wie die weiteren Verfahrensschritte verdeutlichen.

In Schritt IX erfolgt die Bereitstellung einer Steuerdaten-Bibliothek SB, in der Steuerdatensätze SD für eine Windkraftanlage 2, 3 hinterlegt sind. Diese Steuerdaten SD sind mit von dem Ermittlungs-Verfahren ermittelbaren Zuständen einer Windkraftanlage 2, 3 datentechnisch verknüpft, so dass in Abhängigkeit von einem Zustand der betreffenden Windkraftanlage 2, 3 geeignete Steuerdaten ausgewählt werden können.

In Schritt X erfolgt eine Auswahl von Steuerdaten SD gemäß der vorausgesagten Zustandes der betreffenden Windkraftanlage 2, 3.

In Schritt XI werden diese ausgewählten Steuerdaten SD zur Steuerung einer Windkraftanlage 2, 3 (der vorgenannten oder einer anderen) verwendet. Dadurch kann diese Windkraftanlage 2, 3 optimal an die bestehenden Windverhältnisse angepasst werden, insbesondere im Hinblick auf den Zustand einer in Windrichtung folgenden Windkraftanlage 3 (deren vorausgesagter Zustand dann diesem Steuerverfahren zugrunde liegt).

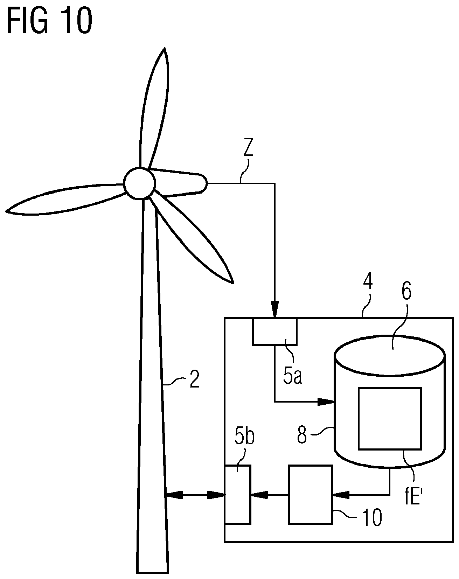

Figur 10 zeigt eine schematische Darstellung einer Steuereinrichtung 4 für eine Windkraftanlage 2. Die Steuereinrichtung 4 umfasst eine erfindungsgemäße Ermittlungseinheit 6 die in diesem Beispiel nur die trainierte Zustandsvorhersage-Einheit fE' aufweist. Mit dem Fehlen der Zeitkorrelations-Einheit LE' ist eine optimale Einschätzung des Windfeldes nur sehr schwer möglich, dies ist jedoch unerheblich, da es sich in diesem Beispiel bei der WKA um die vordere, erste Windkraftanlage 2 handelt, auf die der Wind zuerst trifft. Die Windkraftanlage 2 nimmt ständig Daten auf, die sie der Steuereinrichtung 4 in Form von Zustands-Zeitreihendaten Z an einer ersten Datenschnittstelle 5a zur Verfügung stellt. Von dort werden die Zustands-Zeitreihendaten Z der Ermittlungseinheit 6 zur Verfügung gestellt und mittels der trainierten Zeitkorrelations-Einheit LE' der zukünftige Zustand einer nachfolgenden, zweiten Windkraftanlage 3 ermittelt, also wenn die aktuelle Windfront diese erreicht. Mittels des von der Ermittlungseinheit 6 vorausgesagten Zustand wird von der Steuerdateneinheit 10 Steuerdaten SD ausgewählt, der dazu geeignet ist, die Einflüsse der Wirbelschleppe auf die zweite Windkraftanlage 3 zu mindern.

Dies kann z.B. durch eine Änderung des Anstellwinkels der Rotorblätter der ersten Windkraftanlage 2 erreicht werden. Die Informationen über die Eignung der Steuerdaten SD hat man beispielsweise vorher durch die Ermittlungseinheit 6 erhalten, anhand eines Lern-Datensatzes, in dem gleiche Windverhältnisse vorherrschten, der Anstellwinkel der ersten Windkraftanlage 2 jedoch anders war, was zu einem besseren Zustand der zweiten Windkraftanlage 3 geführt hat.

Über eine zweite Datenschnittstelle 5b werden die Steuerdaten SD an die erste Windkraftanlage 2 übermittelt und diese damit entsprechend der Steuerdaten SD gesteuert. Die Steuervorrichtung 4 könnte noch weitere (nicht dargestellte) Datenschnittstellen oder Eingabeeinheiten für manuelle Steuerbefehle aufweisen.

Es wird abschließend noch einmal darauf hingewiesen, dass es sich bei den vorhergehend detailliert beschriebenen Verfahren sowie bei den dargestellten Ein- und Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass die betreffenden Komponenten aus mehreren zusammenwirkenden Teil-Komponenten bestehen, die gegebenenfalls auch räumlich verteilt sein können.

**Patentansprüche**

1. Verfahren zum Erstellen einer Ermittlungseinheit (6) zur automatischen Ermittlung des Einflusses einer von einer ersten Windkraftanlage (2) verursachten Wirbelschleppe (WS) auf eine zweite Windkraftanlage (3) eines Windkraftsystems (1), wobei die ersten Windkraftanlage (2) bezüglich der Windrichtung vor der zweiten Windkraftanlage (3) steht, umfassend die Schritte:

- Bereitstellung einer Lern-Rechenvorrichtung (7), wobei die Lern-Rechenvorrichtung (7) zum koordinierten Trainieren zumindest zweier Regressionsverfahren basierend auf dem Prinzip des maschinellen Lernens ausgelegt ist,
- Bereitstellung einer Zeitkorrelations-Einheit (LE), welche zur Ausführung eines ersten Regressionsverfahrens auf oder an der Lern-Rechenvorrichtung (7) ausgelegt ist, zur Bildung einer Zeitkorrelations-Funktion (L) zur Ermittlung der Korrelation von Zustandsdaten (Z) der ersten Windkraftanlage (2) mit der zweiten Windkraftanlage (3),
- Bereitstellung einer Zustandsvorhersage-Einheit (fE), welche zur Ausführung eines zweiten Regressionsverfahrens auf oder an der Lern-Rechenvorrichtung (7) ausgelegt ist, zur Bildung einer Zustandsvorhersage-Funktion (f) für die Vorhersage eines Zustands zumindest der zweiten Windkraftanlage (3) basierend auf Zustandsdaten der ersten Windkraftanlage (2),
- Bereitstellung zumindest eines Lern-Datensatzes (LD) umfassend Zustands-Zeitreihendaten (Z) der Windkraftanlagen (2, 3),
- koordiniertes Trainieren der Zeitkorrelations-Einheit (LE) und der Zustandsvorhersage-Einheit (fE) gemäß eines Prinzips des maschinellen Lernens von Regressionsverfahren,
- Erstellen der Ermittlungseinheit (6) mit zumindest der trainierten Zustandsvorhersage-Einheit (fE').

2. Verfahren nach Anspruch 1, wobei die Zeitkorrelations-Einheit (LE) dermaßen trainiert wird, dass Zustands-Zeitreihendaten (Z) der ersten Windkraftanlage (2) zur Erstellung von zeitangepassten Zustands-Zeitreihendaten (Z*) (*zunächst*) mit Hilfe der trainierten Zeitkorrelations-Einheit (LE') auf die Zustands-Zeitreihendaten (Z) des Lern-Datensatzes (LD) der zweiten Windkraftanlage (3) angepasst werden können, und die Zustandsvorhersage-Einheit (fE) unter Nutzung der zeitangepassten Zustands-Zeitreihendaten (Z*) so trainiert wird, dass mittels der trainierten Zustandsvorhersage-Einheit (fE') ein Zustand der zweiten Windkraftanlage (3) auf Basis der Zustands-Zeitreihendaten (Z) der ersten Windkraftanlage (2) geschätzt werden kann.

3. Verfahren nach Anspruch 1 oder 2, wobei die Zustands-Zeitreihendaten (Z) eine zeitliche Reihe von Parameterwerten zumindest eines Parameters der folgenden Gruppe umfassten:

- Leistung
- Umgebungsbedingungen, insbesondere Temperatur und/oder Luftdruck,
- Parameter, welche Informationen über den inneren Zustand einer Windkraftanlage (2, 3) umfassen, insbesondere der aktuelle Neigungswinkel der Rotorblätter und/oder die Gondelausrichtung (z.B. Gierposition), Drehzahl, Turbinensteuerung (z.B. Pitching, Änderung der Gierposition),
- Parameter, welche Informationen über ein Windfeld, bevorzugt eine Windpropagation umfassen, insbesondere Windgeschwindigkeit und/oder Informationen über Turbulenzen.

4. Verfahren nach einem der vorangehenden Ansprüche, wobei ein Regressionsverfahren ein Neuronales Netzwerk, insbesondere ein bayes'sches Netzwerk oder einen Gaußprozess umfasst.

5. Lern-Rechenvorrichtung (7) umfassend einen Prozessor (8) und einen Datenspeicher (9) mit Instruktionen, welche dem Prozessor (8) bei ihrer Ausführung ermöglichen:

- einen der Lern-Rechenvorrichtung (7) bereitgestellten Lern-Datensatz (LD) umfassend zumindest Zustands-Zeitreihendaten (Z) der Windkraftanlagen (2, 3) zu erfassen,
- eine Zeitkorrelations-Einheit (LE) und eine Zustandsvorhersage-Einheit (fE) nach einem Verfahren gemäß einem der vorangehenden Ansprüche koordiniert zu trainieren.

6. Ermittlungseinheit (6) umfassend zumindest

- eine gemäß einem der Ansprüche 1 bis 4 trainierte Zeitkorrelations-Einheit (LE'),
und/oder
- eine gemäß einem der Ansprüche 1 bis 4 trainierte Zustandsvorhersage-Einheit (fE').

7. Ermittlungs-Verfahren zur automatischen Ermittlung des Einflusses einer von einer ersten Windkraftanlage (2) verursachten Wirbelschleppe (WS) auf eine zweite Windkraftanlage (3) eines Windkraftsystems (1), wobei die ersten Windkraftanlage (2) bezüglich der Windrichtung vor der zweiten Windkraftanlage (3) steht, umfassend die Schritte:

- Bereitstellung einer Ermittlungseinheit (6) nach Anspruch 6 umfassend eine trainierte Zustandsvorhersage-Einheit (fE'),
- Bereitstellung eines Datensatzes (D) umfassend Zustands-Zeitreihendaten (Z) zum Zustand zumindest der ersten Windkraftanlage (2),
- Voraussage des Zustandes der hinteren, zweiten Windkraftanlage (3) mittels der trainierten Zustandsvorhersage-Einheit (fE') auf Basis der Zustands-Zeitreihendaten (Z) des Datensatzes (D).

8. Ermittlungs-Verfahren nach Anspruch 7, wobei die Ermittlungseinheit (6) eine trainierte Zeitkorrelations-Einheit (LE) umfasst und die Zustands-Zeitreihendaten (Z) der ersten Windkraftanlage (2) zunächst durch die Zeitkorrelations-Einheit (LE) zeitlich angepasst werden, und danach basierend auf den dermaßen bearbeiteten zeitangepassten Zustands-Zeitreihendaten (Z*) mittels der Zustandsvorhersage-Einheit (fE) der Zustand der zweiten Windkraftanlage (3) vorausgesagt wird.

9. Ermittlungs-Verfahren nach Anspruch 7 oder 8, wobei die Zustandsvorhersage-Einheit (fE) und/oder die Zeitkorrelations-Einheit (LE) während und/oder nach Durchführung der Ermittlung weiter mit einem Verfahren nach einem der Ansprüche 1 bis 4 trainiert werden.

10. Ermittlungs-Verfahren nach einem der Ansprüche 7 bis 9, wobei im Rahmen der Voraussage des Zustandes der zweiten Windkraftanlage (3) deren Leistung vorausgesagt wird und bevorzugt das Leistungsverhältnis LV auf der Basis der Leistung der ersten Windkraftanlage (2) und der vorausgesagten Leistung der zweiten Windkraftanlage (3) ermittelt wird.

11. Steuerverfahren zur automatischen Steuerung einer ersten Windkraftanlage (2) und/oder einer zweiten Windkraftanlage (3) eines Windkraftsystems (1), wobei die erste Windkraftanlage (2) bezüglich der Windrichtung vor der zweiten Windkraftanlage (3) steht,
wobei basierend auf der Voraussage des Zustandes der zweiten Windkraftanlage (3) mittels eines Ermittlungs-Verfahrens gemäß einem der Ansprüche 7 bis 10 Steuerdaten (SD) für eine Windkraftanlage (2, 3) erzeugt werden, wobei das Steuerverfahren bevorzugt zur Steuerung der ersten Windkraftanlage (2) ausgestaltet ist.

12. Steuereinrichtung (4) zur Steuerung eines Windkraftsystems (1), welche zur Durchführung eines Steuerverfahrens nach Anspruch 11 ausgestaltet ist.

13. Windkraftsystem (1) umfassend eine Steuereinrichtung (4) nach Anspruch 12.

14. Computerprogrammprodukt mit einem Computerprogramm, welches direkt in eine Speichereinrichtung eines Rechensystems oder einer Steuereinrichtung (4) eines Windkraftsystems (1) ladbar ist, mit Programmabschnitten, um alle Schritte eines Verfahrens nach einem der Ansprüche 1 bis 4, des Ermittlungs-Verfahrens nach einem der Ansprüche 8 bis 10 oder des Steuerverfahrens nach Anspruch 11 auszuführen, wenn das Computerprogramm in dem Rechensystem oder der Steuereinrichtung (4) ausgeführt wird.

15. Computerlesbares Medium, auf welchem von einer Rechnereinheit einlesbare und ausführbare Programmabschnitte gespeichert sind, um alle Schritte eines Verfahrens nach einem der Ansprüche 1 bis 4, eines Ermittlungs-Verfahrens nach einem der Ansprüche 8 bis 10 oder des Steuerverfahrens nach Anspruch 11 auszuführen, wenn die Programmabschnitte von der Rechnereinheit ausgeführt werden.

# FIG 1

# FIG 2

# FIG 3

# FIG 4

# FIG 5

FIG 6

FIG 7

## FIG 8

## FIG 9

FIG 10

Europäisches Patentamt
European Patent Office
Office européen des brevets

# EUROPÄISCHER RECHERCHENBERICHT

Nummer der Anmeldung

EP 18 15 7368

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 940 296 A1 (GEN ELECTRIC [US]) 4. November 2015 (2015-11-04) * Zusammenfassung * * Absatz [0010] - Absatz [0017] * * Absatz [0023] - Absatz [0025] * * Absatz [0029] - Absatz [0040] * * Absatz [0043] - Absatz [0053] * * Absatz [0057] - Absatz [0061] * * Absatz [0088] - Absatz [0089]; Abbildungen 1,2,3 * | 1-15 | INV. F03D7/04 |
| A | MATTHIAS RITTER ET AL: "Neighborhood Effects in Wind Farm Performance: A Regression Approach", ENERGIES, Bd. 10, Nr. 3, 16. März 2017 (2017-03-16), Seite 365, XP055490651, DOI: 10.3390/en10030365 * das ganze Dokument * | 1-15 | |
| A | US 2016/215759 A1 (FLEMING PAUL [US] ET AL) 28. Juli 2016 (2016-07-28) * Zusammenfassung * * Absatz [0040] - Absatz [0043] * * Absatz [0057] - Absatz [0063]; Abbildungen 1,2,3,4 * | 1-15 | RECHERCHIERTE SACHGEBIETE (IPC) F03D |

Der vorliegende Recherchenbericht wurde für alle Patentansprüche erstellt

| Recherchenort | Abschlußdatum der Recherche | Prüfer |
|---|---|---|
| Den Haag | 17. August 2018 | Westermayer, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 3 527 817 A1

## ANHANG ZUM EUROPÄISCHEN RECHERCHENBERICHT
## ÜBER DIE EUROPÄISCHE PATENTANMELDUNG NR.

EP 18 15 7368

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2018

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2940296 | A1 | 04-11-2015 | BR | 102015009550 | A2 | 06-03-2018 |
| | | | CA | 2888737 | A1 | 29-10-2015 |
| | | | CN | 105041572 | A | 11-11-2015 |
| | | | DK | 2940296 | T3 | 28-08-2017 |
| | | | EP | 2940296 | A1 | 04-11-2015 |
| | | | ES | 2636659 | T3 | 06-10-2017 |
| | | | US | 2015308416 | A1 | 29-10-2015 |
| US 2016215759 | A1 | 28-07-2016 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Pattern Recognition and Machine Learning. **BISH-OP.** Science+Business Media. Springer